# EUROPÄISCHE PATENTSCHRIFT

(11) **EP 0 920 724 B1**
(45) Veröffentlichungstag und Bekanntmachung des Hinweises auf die Patenterteilung: **16.01.2002**
(21) Anmeldenummer: 98932039.5
(22) Anmeldetag: 30.04.1998
(51) Int. Cl.: H02K 5/167, F16C 33/04

(54) **ELEKTRISCHE ANTRIEBSEINHEIT**
ELECTRICAL DRIVE UNIT
UNITE D'ENTRAINEMENT ELECTRIQUE

(30) Priorität: 26.06.1997 DE 19727120
(43) Veröffentlichungstag der Anmeldung: 09.06.1999
(73) Patentinhaber: ROBERT BOSCH GMBH, 70442 Stuttgart (DE)
(72) Erfinder: FISCHER, Ernst, D-76593 Gernsbach (DE); HURST, Richard, D-77656 Offenburg (DE)
(86) Internationale Anmeldenummer: DE9801201
(87) Internationale Veröffentlichungsnummer: WO9900886

(56) Entgegenhaltungen:
- EP-A- 0 485 001
- US-A- 4 920 289
- US-A- 5 129 740
- US-A- 5 164 256

## Beschreibung

### Stand der Technik

Die Erfindung betrifft eine elektrische Antriebseinheit, insbesondere für Scheibenwischer eines Kraftfahrzeugs, umfassend einen Antriebsmotor mit einem in einem im wesentlichen topfförmigen Polgehäuse untergebrachten Anker, mit einem im wesentlichen topfförmigen, stirnseitig an dem Polgehäuse befestigten Getriebegehäuse zur Aufnahme von Getriebeelementen, welche die Drehung einer einerseits in dem Polgehäuse, andererseits in dem Getriebegehäuse gelagerten Ankerwelle des Ankers übersetzen.

Eine derartige Antriebseinheit geht beispielsweise aus der US-A-4 920 289, der DE 32 20 191 A1, der DE 32 35 622 A1, der DE 41 16 100 A1 sowie aus der DE 39 30 144 C2 hervor.

Bei diesen bekannten Antriebseinheiten wird zur Lagerung der Ankerwelle in dem Polgehäuse ein Kalottenlager aus einem Sintermetall verwendet, das durch eine auf das Lager angepaßte Federscheibe in einer Vertiefung im Polgehäuseboden fixiert wird. Durch die Verdrehmöglichkeit der Kalotte wirken sich geringfügige Schiefstellungen des Ankers nicht nachteilig auf die Laufeigenschaften der Antriebseinheit aus.

Problematisch bei einer derartigen Antriebseinheit ist die aufwendige Montage des Kalottenlagers, die zusätzliche Sicherungselemente in Form von Federscheiben o.dgl. erfordert. Bekannt ist ebenfalls durch die EP - A - 485001 ein Verfahren, bei dem ein Rollenlager eines Elektromotors bis an den Boden einer Vertiefung eines Gehäuses mit Spiel eingeschoben wird und in der Vertiefung mittels einer aus der Wandung der Vertiefung geformten Wulst gehalten wird. Der Erfindung liegt daher die Aufgabe zugrunde, eine elektrische Antriebseinheit, insbesondere für Scheibenwischer eines Kraftfahrzeugs, der gattungsgemäßen Art derart weiterzubilden, daß mit möglichst wenigen Teilen eine einfache Montage der Ankerwelle in dem Polgehäuse und infolge davon auch eine möglichst einfache Montage der Antriebseinheit ermöglicht wird.

### Vorteile der Erfindung

Diese Aufgabe wird bei einer elektrischen Antriebseinheit der eingangs beschriebenen Art erfindungsgemäß gelöst daß die kennzeichnenden merkmal von Anspruch 1.

Die Verwendung eines durch Preßpassung montierten Zylinderlagers zur Lagerung der Ankerwelle in dem Polgehäuse, dessen Außendurchmesser größer oder gleich dem Dreifachen seiner Länge ist, hat den besonders großen Vorteil, daß durch den Preßsitz des Lagers zusätzliche Sicherungselemente, wie z.B. Federscheiben u.dgl., entfallen können. Dadurch, daß der Außendurch-messer größer oder gleich dem Dreifachen der Lagerlänge ist, kommt es darüber hinaus bei der Montage des Zylinderlagers durch Preßpassung zu nahezu keiner Verkleinerung des Innendurchmessers aufgrund der großen Wandstärke des Lagers. Dadurch, daß der Außendurchmesser des Lagers wesentlich größer ist als seine Länge, wirken sich auf besonders vorteilhafte Weise auch geringfügige Schiefstellungen der Ankerwelle nicht nachteilig auf die Laufeigenschaften der gesamten Antriebseinheit aus.

Des weiteren ermöglicht ein Zylinderlager mit derartigen Abmessungen eine kompakte Bauweise, d.h. eine Bauraumverkleinerung, insbesondere einer Bauraumverkürzung sowohl des Polgehäuses als auch der Ankerwelle und hierdurch eine Materialersparnis.

Rein prinzipiell kann das Zylinderlager in dem Polgehäuse auf die unterschiedlichste Art und Weise befestigt sein. Beispielsweise können spezielle Lageraufnahmen in dem Polgehäuse vorgesehen sein.

Eine besonders vorteilhafte Ausführungsform sieht vor, daß das Zylinderlager in einer im Boden des Polgehäuses ausgebildeten Vertiefung angeordnet ist. Diese Vertiefung kann in dem zumeist als Tiefziehteil hergestellten Polgehäuse auf vorteilhafte Weise hergestellt werden.

Da darüber hinaus für das Zylinderlager ein großer Lagersitzdurchmesser im Polgehäuse erforderlich ist, ist sichergestellt, daß die Ankerwicklung des Antriebsmotors wegen der für einen derartigen großen Lagersitzdurchmesser notwendigen Vertiefung mit einem großen Durchmesser nicht mit dem Polgehäuseboden kollidieren kann und auch insoweit ein kompakter Aufbau von Motor und Polgehäuse möglich ist.

Darüber hinaus ist vorteilhafterweise vorgesehen, daß der Körper des Zylinderlagers als Schmierstoffdepot dient. Auch hierbei ist es besonders vorteilhaft, daß der Außendurchmesser des Zylinderlagers wesentlich größer ist als seine Länge. Aufgrund des großen Außendurchmessers des Lagers wird so bei einer kurzen Lagerlänge ein ausreichendes Porenvolumen in dem Körper des Zylinderlagers erzeugt, das als Schmierstoffdepot dient.

### Zeichnung

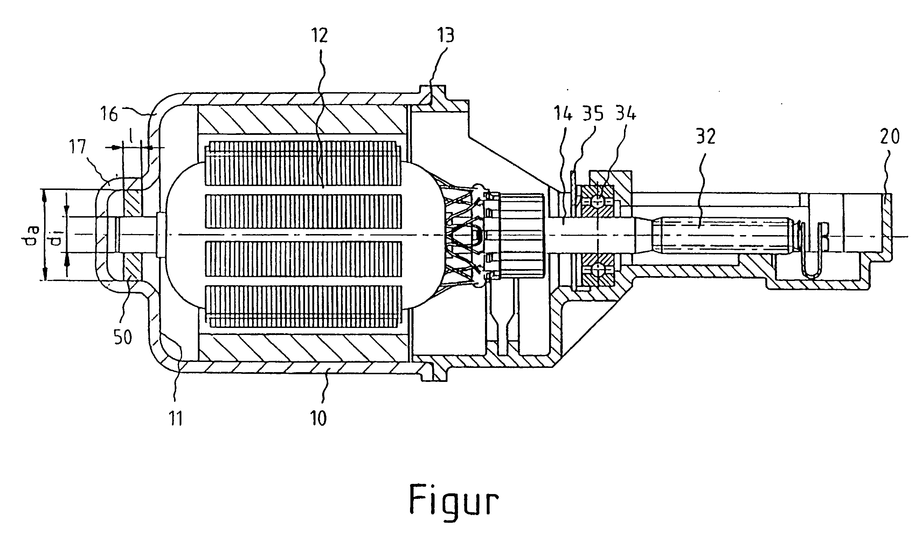

Weitere Merkmale und Vorteile der Erfindung sind Gegenstand der nachfolgenden Beschreibung sowie der zeichnerischen Darstellung eines Ausführungsbeispiels. In der Figur ist eine teilweise geschnittene Seitenansicht einer erfindungsgemäßen elektrischen Antriebseinheit bei abgenommenem Getriebedeckel dargestellt.

### Beschreibung eines Ausführungsbeispiels

Eine in der Figur dargestellte elektrische Antriebseinheit für Scheibenwischer eines Kraftfahrzeugs umfaßt ein im wesentlichen topfförmiges Polgehäuse 10, in dem ein an sich bekannter elektrischer Anker 12 untergebracht ist.

Stirnseitig an einem Flansch 13 des Polgehäuses 10 ist ein im wesentlichen ebenfalls topfförmiges Getriebegehäuse 20 befestigt, welches zur Aufnahme eines Getriebezahnrades, das in eine mit einer Ankerwelle 14 des Ankers 12 verbundene Schnecke 32 eingreift, dient. Die Ankerwelle 14 ist in dem Getriebegehäuse 20 in einem Kugellager 34 gelagert, das durch einen Haltebügel 35 in dem Getriebegehäuse 20 axial gesichert ist.

Die Ankerwelle 14 ist auf ihrer dem Getriebegehäuse 20 abgewandten Seite in einer in dem Polgehäuse 10 ausgebildeten Vertiefung 17 mittels eines durch Preßpassung montierten Zylinderlagers 50 gelagert. Der Außendurchmesser dₐ des Zylinderlagers 50 ist dabei größer oder gleich dem Dreifachen seiner Länge 1. Das Zylinderlager 50 selbst besteht aus einem Sintermetall. Der toroid- bzw. ringförmige Körper des Zylinderlagers 50 bildet ein Schmierstoffdepot.

Durch den großen Außendurchmesser dₐ des Zylinderlagers 50, der wesentlich größer als seine Länge 1 ist, wird vermieden, daß beim Montieren des Zylinderlagers 50 durch Preßpassung eine Durchmesserverkleinerung des dem Außendurchmesser der Ankerwelle 14 entsprechenden Innendurchmessers dᵢ entsteht. Außerdem wird eine Montage der Ankerwelle 14 erschwert oder gar unmöglich gemacht.

Der große Außendurchmesser dₐ des eingepreßten Zylinderlagers 50 ermöglicht insbesondere auch ein ausreichendes Porenvolumen für den Schmierstoff und stellt so eine gute Schmierung des Zylinderlagers über einen langen Zeitraum sicher.

Aufgrund der kleinen Länge 1 des Zylinderlagers 50 wirken sich geringfügige Schiefstellungen der Ankerwelle 14 nicht nachteilig auf den Lauf der Antriebseinheit aus, da es aufgrund der Kürze des Zylinderlagers 50 praktisch nicht zu Verspannungen der Ankerwelle 14 im Zylinderlager 50 kommen kann.

Da das Zylinderlager 50 durch Preßpassung in der Vertiefung 17 des Polgehäuses 10 montiert ist, können auch zusätzliche Sicherungselemente zur Befestigung, beispielsweise Federscheiben o.dgl., entfallen, so daß insbesondere auch die Montage des Zylinderlagers 50 und damit auch der gesamten Antriebseinheit wesentlich vereinfacht wird.

## Patentansprüche

1. Elektrische Antriebseinheit, insbesondere für Scheibenwischer eines Kraftfahrzeugs, umfassend einen Antriebsmotor mit einem in einem im wesentlichen topfförmigen Polgehause (10) untergebrachten Anker (12), mit einem im wesentlichen topfförmigen, stirnseitig an dem Polgehäuse (10) befestigten Getriebegehäuse (20) zur Aufnahme von Getriebeelementen, welche die Drehung einer einerseits in dem Polgehäuse (10), andererseits in dem Getriebegehäuse (20) gelagerten Ankerwelle (14) des Ankers (12) übersetzen, **dadurch gekennzeichnet, daß** die Ankerwelle (14) benachbart zu einem Boden (11) des Polgehäuses in einem durch Preßpassung montierten Zylinderlager (50) gelagert ist, dessen Außendurchmesser (da) größer oder gleich dem Dreifachen seiner Länge (1) ist, wobei das Zylinderlager (50) in einer in dem Polgehäuseboden (11) ausgebildeten Vertiefung (17) angeordnet ist und nicht an einem Boden der Vertiefung (17) anliegt.

2. Antriebseinheit nach Anspruch 1, **dadurch gekennzeichnet, daß** das Zylinderlager (50) aus Sintermetall besteht.

3. Antriebseinheit nach Anspruch 1 oder 2, **dadurch gekennzeichnet, daß** der Körper des Zylinderlagers (50) als Schmierstoffdepot dient.

## Claims

1. Electrical drive unit, in particular for motor vehicle windscreen wipers, comprising a drive motor having an armature (12) which is accommodated in an essentially pot-shaped field frame, having an essentially pot-shaped gearbox housing (20), which is mounted on the end face of the field frame (10), for accommodating gearbox elements which step up the rotation of an armature shaft (14) of the armature (12), which armature shaft (14) is mounted firstly in the field frame (10) and secondly in the gearbox housing (20), **characterized in that** the armature shaft (14) is mounted in a cylindrical bearing (50) adjacent to a base (11) of the pole housing, which cylindrical bearing (50) is mounted by means of a push fit and has an external diameter (da) which is greater than or equal to three times its length (1), with the cylindrical bearing (50) being arranged in a depression (17) formed in the field frame base (11), and not resting on a base of the depression (17).

2. Drive unit according to Claim 1, **characterized in that** the cylindrical bearing (50) is composed of sintered metal.

3. Drive unit according to Claim 1 or 2, **characterized in that** the body of the cylindrical bearing (50) is used as a lubricant reservoir.

## Revendications

1. Unité d'entraînement électrique notamment pour des essuie-glace de véhicule comprenant un moteur avec un induit (12) logé dans un boîtier polaire (10) essentiellement en forme de pot, un boîtier de transmission (20) essentiellement en forme de pot, fixé contre la face frontale du boîtier polaire (10) pour recevoir des éléments de transmission qui démultiplient la rotation de l'arbre (14) de l'induit (12) monté d'une part dans le boîtier polaire (10) et d'autre part dans le boîtier de transmission (20),
**caractérisée en ce que**
l'arbre d'induit (14) est monté au voisinage du fond (11) du boîtier polaire dans un palier cylindrique (50) installé par un ajustage pressé, palier dont le diamètre extérieur (dₐ) est plus grand ou égal au triple de sa longueur (1),
le palier cylindrique (50) logé dans une cavité (17) réalisée dans le fond (11) du boîtier polaire ne s'appuie pas contre le fond de la cavité (17).

2. Unité d'entraînement selon la revendication 1,
**caractérisée en ce que**
le palier cylindrique (50) est en métal fritté.

3. Unité d'entraînement selon l'une quelconque des revendications 1 ou 2,
**caractérisée en ce que**
le corps du palier cylindrique (50) constitue une réserve d'agent lubrifiant.
